# EUROPEAN PATENT SPECIFICATION

(11) **EP 3 556 509 B1**
(45) Date of publication and mention of the grant of the patent: **01.09.2021**
(21) Application number: 16923734.4
(22) Date of filing: 14.12.2016
(51) Int. Cl.: B23P 23/04, B23K 26/067, B23K 26/00, B23K 26/06, B23K 26/211, B23K 26/34

(54) **COMBINED PROCESSING MACHINE WITH A LASER BEAM SPLITTER**
KOMBINIERTE BEARBEITUNGSMASCHINE MIT EINEM LASERSTRAHLTEILER
MACHINE D'USINAGE COMBINÉE AVEC UN DIVISEUR DE FAISCEAU LASER

(43) Date of publication of application: 23.10.2019
(73) Proprietor: Tongtai Machine & Tool Co., Ltd., Kaohsiung City 82151 (TW)
(72) Inventor: YANG, Chihhsiang, Kaohsiung 82151 (TW); CHEN, HsinPao, Kaohsiung 82151 (TW); YEN, Juihsiung, Kaohsiung 82151 (TW)
(74) Representative: Patentanwälte Olbricht Buchhold Keulertz
(86) International application number: PCT/CN2016/109919
(87) International publication number: WO 2018/107395

(56) References cited:
- CN-A- 1 559 754
- CN-A- 1 559 754
- CN-A- 103 358 126
- CN-A- 103 394 809
- CN-A- 104 439 716
- CN-A- 104 439 716
- CN-U- 203 526 795
- DE-A1-102009 001 889
- JP-A- S63 192 581
- JP-A- 2007 083 285
- US-A1- 2016 101 492

## Description

The present disclosure relates to a machining apparatus with a laser spectrometric device, and in particular to a combined machining apparatus with a laser spectroscopic device used in computer numerical control machine.

### BACKGROUND OF THE INVENTION

Traditional machines are mainly controlled to feed material to machine a workpiece according to operation technology of operators. Therefore, the quality of the workpiece is affected by human factors, and there are disadvantages of high cost and low productivity. With the development of a computer numerical control (CNC) machine, the computer numerical control machine can provide advantages of high machining accuracy, low cost, and high productivity compared with traditional machines.

The computer numerical control machine can implement various cuttings through replacing different tool heads. During the cutting process, it needs to operate another machine at welding or heat treatment. Especially, in the laser process, for example, during the laser cladding process, it needs to operate a laser machine.

However, when the machines are operated in the metalworking process, a workpiece needs to be moved, fixed, and machined between the machines. Then, the workpiece is repeated to move, fix, and machine. It causes the machine time to be greatly increased. In addition, the computer numerical control machine needs some time to replace tools if a laser process is adopted, wherein the subtractive process of mechanical, the subtractive process of laser and the addition process of laser cannot be implemented at the same time. Thus, the machining efficiency of the computer numerical control machine is limited. For example, patent document US 2016/101492 A1 (basis for the preamble of claim 1) discloses a laser-assisted machining device includes a spindle, a beam splitting module and a cutting tool. The spindle has a chamber, and multiple exit holes. The beam splitting module is disposed in the spindle and includes a beam splitter for splitting a main laser beam into a plurality of secondary laser beams that are directed into the chamber, and an outer reflecting unit mounted in the chamber for reflecting the secondary laser beams out of the spindle through the exit holes. The cutting tool is fixedly mounted on the spindle, for machining a workpiece, and includes multiple cutting teeth. The secondary laser beams maintain constant irradiation on multiple areas of the workpiece during rotation of the spindle; patent document (JP S63 192581 A) discloses that the laser beam oscillator 15 is provided on an upper frame 13 of the laser beam machine 1 and the laser beam splitting device 19 is arranged to a supporting frame 17 of the tip of the frame 13. Further, first and second machining heads 33 and 35 provided with bend mirrors 25 and 27 and condenser lenses 33 and 35 respectively are arranged at both sides of the supporting frame 17. A laser beam LB emitted from the laser beam oscillator 15 is equally splitted into reflected light and transmitted light by the splitting device 19 and made incident on the first and second machining heads 33 and 35 respectively. In this way, since the plural machining heads 33 and 35 can be operated at the same time, the laser beam machining capacity is improved; patent document (DE 10 2009 001889 A1) discloses that the invention relates to a laser unit 1 with a laser beam source 7 for generating a laser beam 20, wherein the generated laser beam 20 is first modified in a DOE and / or ROE 50 and the modified laser beam is then at least partially deflected in a quad mirror 2 such that resulting partial beams 10a, 10b, 10c, 10d, 12 span a coordinate system, wherein a projection of the partial beams has a caused by the DOE and / or ROE beam expansion.

As a result, it is necessary to provide a combined machining apparatus to solve the problems existing in the conventional technologies, as described above.

### SUMMARY OF THE INVENTION

An object of the present disclosure is to provide a combined machining apparatus, wherein laser beams can be generated by using a laser spectroscopic device for machining a workpiece, and a spindle can selectively assemble a tool head or a feeding head, so that attachment and replacement of tools can be reduced, machining time can be decreased, and machining efficiency can be improved.

To achieve the above objects, the present invention defines a combined machining apparatus according to claim 1. The combined machining apparatus comprises a machining platform, a machining device and a laser spectroscopic device, wherein the machining platform is configured to place a workpiece, and the machining device includes a body and a spindle mounted on the body, wherein the spindle is configured to selectively assemble a tool head or a feeding head. The laser spectroscopic device is disposed at a side of the spindle and comprising: a laser splitting module configured to split a main laser into at least two laser beams; and at least two laser outlets configured to output the laser beams to the workpiece, respectively.

According to the present invention, the laser splitting module includes: an incident lens configured to introduce the main laser; a laser splitting box configured to split the main laser into the laser beams; and at least two transmitting channels configured to guide the laser beams to the laser outlets, respectively.

In one embodiment, the laser splitting module further includes a plurality of reflecting mirrors disposed in the transmitting channels and configured to reflect the laser beams to corresponding laser outlets.

According to the present invention, the laser spectroscopic device further includes two positioning modules connected to the transmitting channels, respectively, and configured to adjust a heat affected zone of each of the laser outlets.

In one embodiment, the combined machining apparatus further comprises a movement unit including an X-axis slider and a Y-axis slider, wherein the machining platform is moveably assembled on the X-axis slider, and the X-axis slider is moveably assembled on the Y-axis slider.

In one embodiment, the movement unit further includes a Z-axis slider, and the body of the machining device is moveably assembled on the Z-axis slider.

As described above, the laser beams can be generated by using the laser spectroscopic device for machining the workpiece, and the spindle can selectively assemble the tool head or the feeding head. Thus, the subtractive process of mechanical, the subtractive process of laser and the addition process of laser can be implemented. Combining the subtractive process of mechanical, the subtractive process of laser and the addition process of laser can achieve the purpose for combined machining the workpiece. In addition, attachment and replacement of tools can be reduced, so that machining time can be decreased, and machining efficiency can be improved.

### DESCRIPTION OF THE DRAWINGS

Fig. 1 is a perspective view of a combined machining apparatus according to a preferred embodiment of the present disclosure.
Fig. 2 is a perspective view of a laser spectroscopic device of the combined machining apparatus according to a preferred embodiment of the present disclosure.
Fig. 3 is a top view of a laser spectroscopic device of the combined machining apparatus according to a preferred embodiment of the present disclosure.
Fig. 4 is a perspective view of a combined machining apparatus according to another preferred embodiment of the present disclosure.
Figs. 5 and 6 is a perspective view of a combined machining apparatus according to a further preferred embodiment of the present disclosure.

### DETAILED DESCRIPTION OF THE PREFERRED EMBODIMENTS

The structure and the technical means adopted by the present disclosure to achieve the above and other objects can be best understood by referring to the following detailed description of the preferred embodiments and the accompanying drawings. Furthermore, directional terms described by the present disclosure, such as upper, lower, front, back, left, right, inner, outer, side, longitudinal/vertical, transverse/horizontal, etc., are only directions by referring to the accompanying drawings, and thus the used directional terms are used to describe and understand the present disclosure, but the present disclosure is not limited thereto.

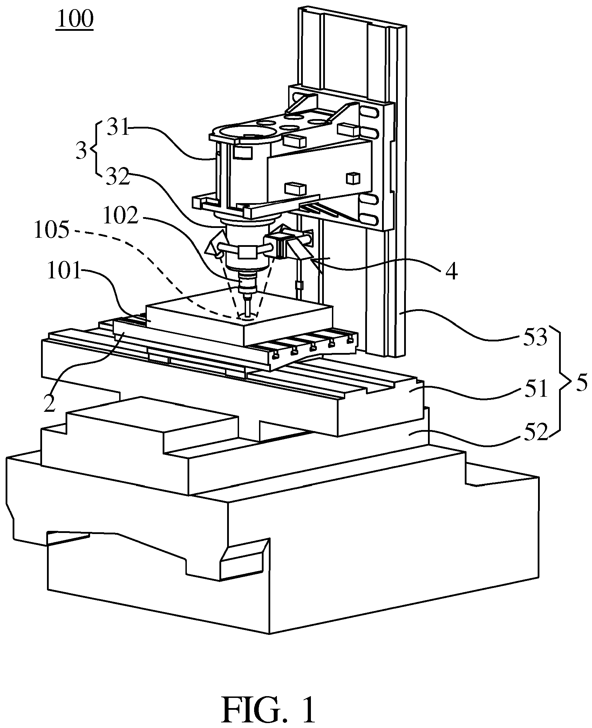

Referring to Fig. 1, a combined machining apparatus 100 according to a preferred embodiment of the present disclosure is illustrated, and used in computer numerical control (CNC) machine, wherein the combined machining apparatus 100 is configured to combined machine a workpiece 101 by adopting an addition process or a subtractive process. The combined machining apparatus 100 comprises a machining platform 2, a machining device 3, a laser spectroscopic device 4, and a movement unit 5. The detailed structure of each component, assembly relationships, and principle of operation in the present invention will be described in detail hereinafter.

Referring to Fig. 1, the machining platform 2 is configured to place the workpiece 101, wherein the machining platform 2 is disposed under the machining device 3, and the machining platform 2 and the machining device 3 are spaced apart from each other.

Referring to Fig. 1, the machining device 3 includes a body 31 and a spindle 32, wherein the spindle 32 is mounted on the body 31, and a bottom of the spindle 32 is configured to assemble a tool head 102, wherein tool head 102 is configured to selectively assemble a milling tool or a turning tool.

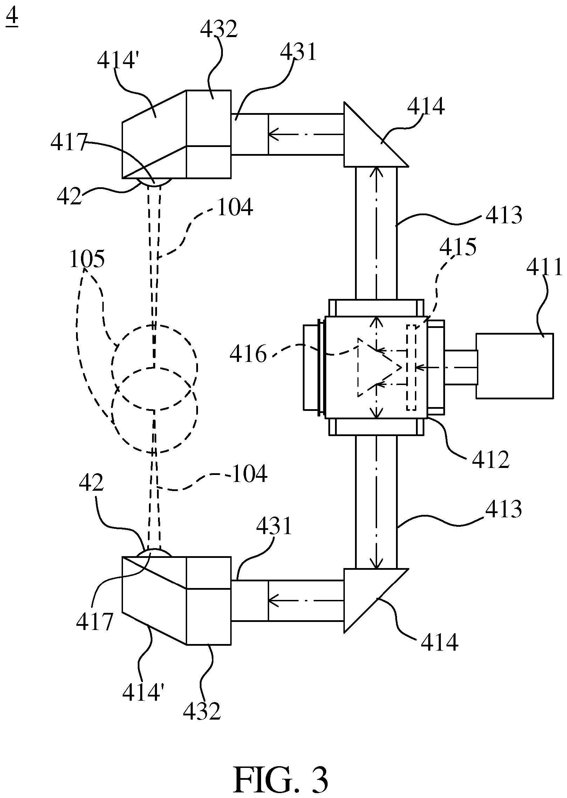

Referring to Figs. 1 to 3, the laser spectroscopic device 4 is disposed at a side of the spindle 32 of the machining device 3, wherein the laser spectroscopic device 4 comprises a laser splitting module 41, two laser outlets 42, and two positioning modules 43. The laser splitting module 41 is configured to split a main laser from a laser source (not shown) into two laser beams 104. The laser outlets 42 are located at two opposite sides of the spindle 32, and the laser outlets 42 are configured to output the laser beams 104 to the workpiece 101, respectively. The positioning modules 43 are disposed on the laser splitting module 41, and configured to adjust a heat affected zone 105 (laser spot) of each of the laser outlets 42, wherein the laser beams 104 can be general beams or coupling beams.

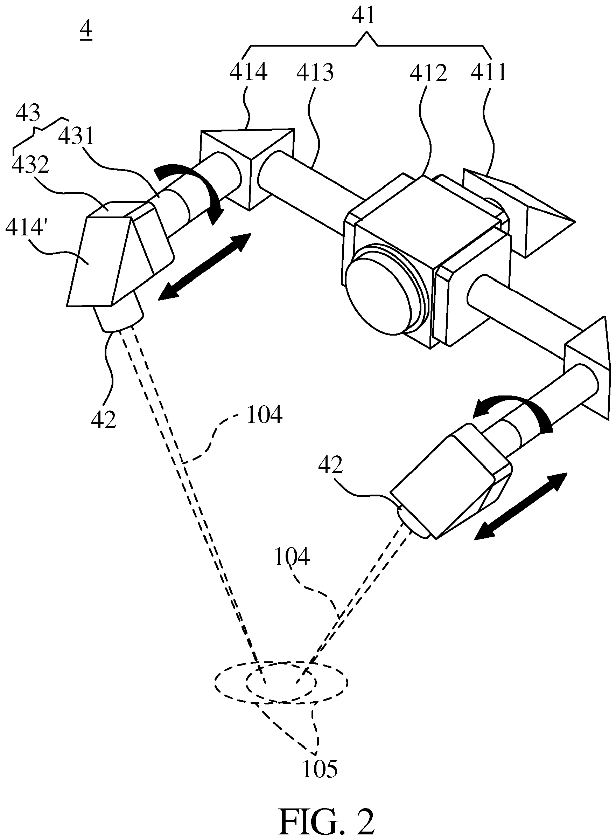

Referring to Figs. 2 to 3, specifically, the laser splitting module 41 includes an incident lens 411, a laser splitting box 412, two transmitting channels 413, and a plurality of reflecting mirrors 414, wherein the incident lens 411 is configured to introduce the main laser from the laser source. The laser splitting box 412 is disposed at a side of the incident lens 411 and configured to split the main laser into the laser beams 104, wherein the laser splitting box 412 includes a diffractive component 415 and a split reflecting mirror 416. The diffractive component 415 is configured to split a main laser into two laser beams 104. The split reflecting mirror 416 is configured to reflect the laser beams into the transmitting channels 413, respectively. The transmitting channels 413 are disposed at two opposite sides of the laser splitting box 412, and configured to guide the laser beams 104 to the laser outlets 42, respectively. The reflecting mirrors 414 are disposed in the transmitting channels 413 and configured to reflect the laser beams 104 to corresponding laser outlets 42. In addition, each of the laser outlets 42 is provided with a focusing lens 417, wherein the focusing lens 417 is configured to focus the laser beam 104 and to project the laser beam 104 to the heat affected zone 105 from the laser outlet 42.

Referring to Figs. 2 to 3, each of the positioning modules 43 includes a telescopic portion 431 and a rotating portion 432. As shown in Fig. 2, the telescopic portion 431 is disposed on the corresponding transmitting channel 413, and reciprocally moved along an arrow direction, and configured to linearly adjust the heat affected zone 105 of one of the laser outlets 42. The rotating portion 432 is pivoted on the telescopic portion 431, and reciprocally rotated along another arrow direction, and configured to rotatably adjust the heat affected zone 105 of the laser outlet 42 through another reflecting mirrors 414'.

Referring to Fig. 1, the movement unit 5 includes an X-axis slider 51, a Y-axis slider 52, and Z-axis slider 53, wherein the machining platform 2 is moveably assembled on the X-axis slider 51, and moved along an X axis direction on the X-axis slider 51. The X-axis slider 51 is moveably assembled on the Y-axis slider 52, and moved along a Y axis direction on the Y-axis slider 52. The body 31 of the machining device 3 is moveably assembled on the Z-axis slider 53, and moved along a Z axis direction on the Z-axis slider 53. Therefore, the spindle 32 can move to anyplace above the workpiece 101 through the movement unit 5 move.

According to the described structure and referring to Fig. 1, the movement unit 5 is controlled by a controller (not shown) to adjust the position of the spindle 32 above the workpiece 101. Then, the telescopic portion 431 and the rotating portion 432 of the positioning modules 43 are controlled, so that the heat affected zone 105 of laser beams 104 are allowed to move on the workpiece 101, and the material on the workpiece 101 can be partially removed through the laser beams 104. In addition, the tool head 102 assembled on the spindle 32 can be processed by adopting the subtractive process through the milling tools or the turning tools, such as cutting, drilling, and milling. Thus, the purpose for adopting a variety of subtractive processes can be achieved, and attachment and replacement of tools can be reduced.

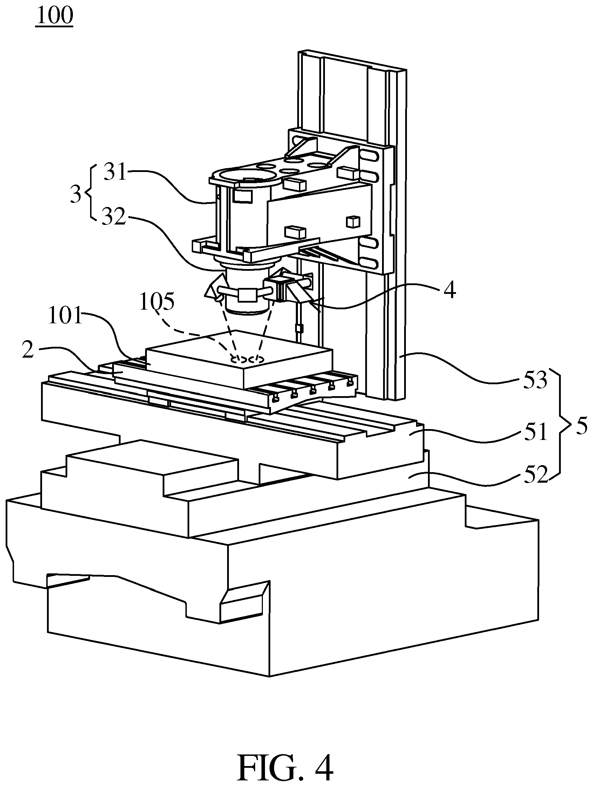

Referring to Fig. 4, a combined machining apparatus 100 according to another preferred embodiment can only machine the workpiece 101 through the laser spectroscopic device 4. In other words, the heat affected zone 105 of laser beams 104 are allowed to move on the workpiece 101 by controlling the telescopic portion 431 and the rotating portion 432 of the positioning modules 43, thus the workpiece 101 can be processed by adopting the subtractive process, such as drilling, cutting, marking and surface treatment.

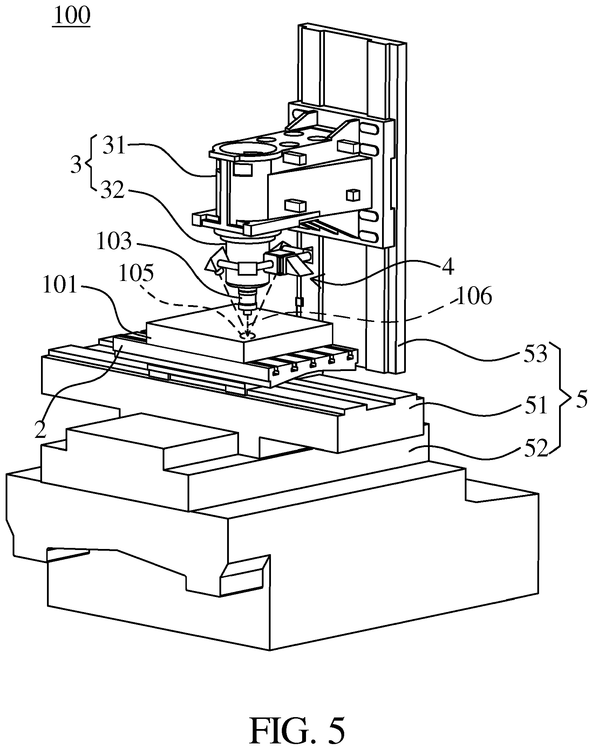

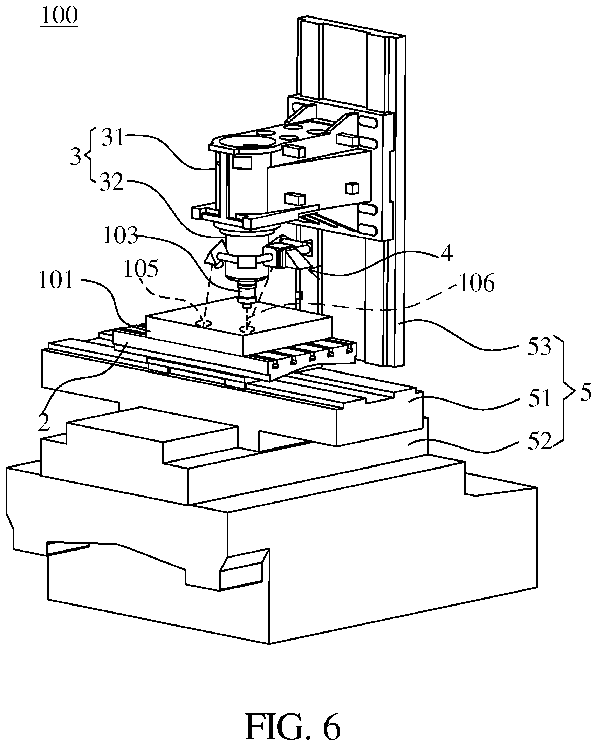

Referring to Figs. 5 and 6, a further preferred embodiment is proved, wherein the bottom of the spindle 32 is configured to assemble a tool head 102, wherein tool head 102 can be configured to assemble a feeding head 103. The feeding head 103 can deposit powdery, gel, or wire feeding to the workpiece 101. As shown in Fig. 5, the heat affected zone 105 of laser beams 104 are allowed to move on the workpiece 101 by controlling the telescopic portion 431 and the rotating portion 432 of the positioning modules 43. Simultaneously, the material 106 of the feeding head 103 is melted or sintered to the workpiece 101, thus the workpiece 101 can be processed by adopting the addition process, such as layered manufacturing, welding, and repairing, wherein the material 106 is fed from powdery, gel, or wire feeding. As shown in Fig. 6, the laser beams 104 can be processed by adopting the addition process or the subtractive process through adjusting the heat affected zone 105 of laser beams 104.

As described above, the laser beams 104 can be generated by using the laser spectroscopic device 4 for machining the workpiece 101, and the spindle 32 can selectively assemble the tool head 102 or the feeding head 103. Thus, the subtractive process of mechanical, the subtractive process of laser and the addition process of laser can be implemented. Combining the subtractive process of mechanical, the subtractive process of laser and the addition process of laser can achieve the purpose for combined machining the workpiece 101. In addition, attachment and replacement of tools can be reduced, so that machining time can be decreased, and machining efficiency can be improved.

## Claims

1. A combined machining apparatus, wherein the combined machining apparatus comprises:
a machining platform (2) configured to place a workpiece (101);
a machining device (3) including a body (31) and a spindle (32) mounted on the body (31), wherein the spindle (32) is configured to selectively assemble a tool head (102) or a feeding head (103); and
a laser spectroscopic device (4) disposed at a side of the spindle (32) and comprising: a laser splitting module (41) configured to split a main laser into at least two laser beams (104); and at least two laser outlets (42) configured to output the laser beams (104) to the workpiece (101), respectively;
**characterized in that** the laser splitting module (41) includes an incident lens (411) configured to introduce the main laser, a laser splitting box (412) configured to split the main laser into the laser beams (104), and at least two transmitting channels (413) configured to guide the laser beams (104) to the laser outlets (42), respectively;
the laser spectroscopic device (4) further includes two positioning modules (43) connected to the transmitting channels (413), respectively, and configured to adjust a heat affected zone (105) of each of the laser outlets (42);
wherein each of the positioning modules (42) includes a telescopic portion (431) and a rotating portion (432); the telescopic portion (431) is disposed on the corresponding transmitting channel (413), reciprocally moved, and configured to linearly adjust the heat affected zone (105) of one of the laser outlets (42); the rotating portion (432) is pivoted on the telescopic portion (431), reciprocally rotated, and configured to rotatably adjust the heat affected zone (105) of one of the laser outlets (42).

2. The combined machining apparatus according to claim 1, **characterized in that** the laser splitting module (41) further includes a plurality of reflecting mirrors (414) disposed in the transmitting channels (413) and configured to reflect the laser beams (104) to corresponding laser outlets (42).

3. The combined machining apparatus according to claim 1, **characterized in that** the combined machining apparatus further comprises a movement unit (5) including an X-axis slider (51) and a Y-axis slider (52), wherein the machining platform (2) is moveably assembled on the X-axis slider (51), and the X-axis slider (51) is moveably assembled on the Y-axis slider (52).

4. The combined machining apparatus according to claim 3, **characterized in that** the movement unit further includes a Z-axis slider (53), and the body (31) of the machining device (3) is moveably assembled on the Z-axis slider (53).

## Patentansprüche

1. Kombinierte Bearbeitungseinrichtung, wobei die kombinierte Bearbeitungseinrichtung umfasst:
eine Bearbeitungsplattform (2), die konfiguriert ist, um ein Werkstück (101) zu platzieren;
eine Bearbeitungsvorrichtung (3), die ein Gehäuse (31) und eine Spindel (32) beinhaltet, die an dem Gehäuse (31) angebracht ist, wobei die Spindle (32) konfiguriert ist, um selektiv einen Werkzeugkopf (102) oder einen Zuführungskopf (103) zusammenzufügen; und
eine spektroskopische Laservorrichtung (4), die an einer Seite der Spindel (32) angeordnet ist, und Folgendes umfasst: ein Laseraufteilungsmodul (41), das konfiguriert ist, um einen Hauptlaser in mindestens zwei Laserstrahlen (104) aufzuteilen; und mindestens zwei Laserauslässe (42), die konfiguriert sind, um die Laserstrahlen (104) jeweils zu den Werkstücken (101) auszugeben;
**dadurch gekennzeichnet, dass** das Laseraufteilungsmodul (41) eine Einfallslinse (411) beinhaltet, die konfiguriert ist, um den Hauptlaser einzuführen, eine Laseraufteilungsbox (412), die konfiguriert ist, um den Hauptlaser in die Laserstrahlen (104) aufzuteilen, und mindestens zwei Übertragungskanäle (413), die konfiguriert sind, um die Laserstrahlen (104) jeweils zu den Laserauslässen (42) zu leiten;
die spektroskopische Laservorrichtung (4) weiter zwei Positionierungsmodule (43) beinhaltet, die jeweils mit den Übertragungskanälen (413) verbunden sind, und konfiguriert sind, um eine Wärmeeinflusszone (105) von jedem der Laserauslässe (42) anzupassen;
wobei jedes der Positionierungsmodule (42) einen teleskopischen Abschnitt (431) und einen drehenden Abschnitt (432) beinhaltet; der teleskopische Abschnitt (431) an dem entsprechenden Übertragungskanal (413) angeordnet ist, der sich hin- und herbewegt, und konfiguriert ist, um die Wärmeeinflusszone (105) von einem der Laserauslässe (42) linear anzupassen; der drehende Abschnitt (432) auf dem teleskopischen Abschnitt (431) geschwenkt wird, der sich hin- und herdreht, und konfiguriert ist, um die Wärmeeinflusszone (105) von einem der Laserauslässe (42) drehend anzupassen.

2. Kombinierte Bearbeitungseinrichtung nach Anspruch 1, **dadurch gekennzeichnet, dass** das Laseraufteilungsmodul (41) weiter eine Vielzahl von Reflexionsspiegeln (414) beinhaltet, die in den Übertragungskanälen (413) angeordnet sind, und konfiguriert sind, um die Laserstrahlen (104) zu entsprechenden Laserauslässen (42) zu reflektieren.

3. Kombinierte Bearbeitungseinrichtung nach Anspruch 1, **dadurch gekennzeichnet, dass** die kombinierte Bearbeitungseinrichtung weiter eine Bewegungseinheit (5) umfasst, die einen X-Achsen-Schlitten (51) und einen Y-Achsen-Schlitten (52) beinhaltet, wobei die Bearbeitungsplattform (2) beweglich an dem X-Achsen-Schlitten (51) angebracht ist und der X-Achsen-Schlitten (51) beweglich an dem Y-Achsen-Schlitten (52) angebracht ist.

4. Kombinierte Bearbeitungseinrichtung nach Anspruch 3, **dadurch gekennzeichnet, dass** die Bewegungseinheit weiter einen Z-Achsen-Schlitten (53) beinhaltet und das Gehäuse (31) der Bearbeitungsvorrichtung (3) beweglich an dem Z-Achsen-Schlitten (53) angebracht ist.

## Revendications

1. Appareil d'usinage combiné, dans lequel l'appareil d'usinage combiné comprend :
une plate-forme d'usinage (2) configurée pour placer une pièce d'ouvrage (101) ;
un dispositif d'usinage (3) incluant un corps (31) et une broche (32) montée sur le corps (31), dans lequel la broche (32) est configurée pour assembler sélectivement une tête d'outil (102) ou une tête d'alimentation (103) ; et
un dispositif spectroscopique laser (4) disposé au niveau d'un côté de la broche (32) et comprenant: un module de division de laser (41) configuré pour diviser un laser principal en au moins deux faisceaux laser (104) ; et au moins deux sorties laser (42) configurées pour délivrer respectivement les faisceaux laser (104) à la pièce d'ouvrage (101) ;
**caractérisé en ce que** le module de division de laser (41) inclut une lentille incidente (411) configurée pour introduire le laser principal, une boîte de division de laser (412) configurée pour diviser le laser principal en les faisceaux laser (104), et au moins deux canaux de transmission (413) configurés pour guider les faisceaux laser (104) respectivement vers les sorties laser (42) ;
le dispositif spectroscopique laser (4) inclut en outre deux modules de positionnement (43) reliés respectivement aux canaux de transmission (413) et configurés pour ajuster une zone affectée par la chaleur (105) de chacune des sorties laser (42) ;
dans lequel chacun parmi les modules de positionnement (42) inclut une portion télescopique (431) et une portion rotative (432) ; la portion télescopique (431) est disposée sur le canal de transmission (413) correspondant, déplacée en va-et-vient, et configurée pour ajuster linéairement la zone affectée par la chaleur (105) de l'une parmi les sorties laser (42) ; la portion rotative (432) est pivotée sur la portion télescopique (431), déplacée en va-et-vient, et configurée pour ajuster en rotation la zone affectée par la chaleur (105) de l'une parmi les sorties laser (42).

2. Appareil d'usinage combiné selon la revendication 1, **caractérisé en ce que** le module de division de laser (41) inclut en outre une pluralité de miroirs réfléchissants (414) disposés dans les canaux de transmission (413) et configurés pour réfléchir les faisceaux laser (104) vers les sorties laser (42) correspondantes.

3. Appareil d'usinage combiné selon la revendication 1, **caractérisé en ce que** l'appareil d'usinage combiné comprend en outre une unité de déplacement (5) incluant un coulisseau d'axe X (51) et un coulisseau d'axe Y (52), dans lequel la plate-forme d'usinage (2) est assemblée de manière à pouvoir se déplacer sur le coulisseau d'axe X (51), et le coulisseau d'axe X (51) est assemblé de manière à pouvoir se déplacer sur le coulisseau d'axe Y (52).

4. Appareil d'usinage combiné selon la revendication 3, **caractérisé en ce que** l'unité de déplacement inclut en outre un coulisseau d'axe Z (53), et le corps (31) du dispositif d'usinage (3) est assemblé de manière à pouvoir se déplacer sur le coulisseau d'axe Z (53).
